Europäisches Patentamt

European Patent Office

Office européen des brevets

(19)

(11) Publication number: **0 309 380 B1**

(12) # EUROPEAN PATENT SPECIFICATION

(45) Date of publication of patent specification: **25.11.92**

(51) Int. Cl.⁵: **B01D 15/08**

(21) Application number: **88710032.9**

(22) Date of filing: **26.09.88**

(54) **Recycle chromatograph with supercritical fluid.**

(30) Priority: **25.09.87 JP 240360/87**

(43) Date of publication of application:
**29.03.89 Bulletin 89/13**

(45) Publication of the grant of the patent:
**25.11.92 Bulletin 92/48**

(84) Designated Contracting States:
**DE FR GB**

(56) References cited:
**EP-A- 0 275 933**
**DE-A- 2 719 317**
**DE-A- 2 729 462**
**DE-B- 2 036 525**
**FR-A- 2 527 934**

(73) Proprietor: **NIHON BUNKO KOGYO KABUSHIKI KAISHA**
**2967-5, Ishikawa-cho**
**Hachioji-shi Tokyo 192(JP)**

(72) Inventor: **Saito, Muneo**
**4-19-28-304, Minamiosawa**
**Hachioji-shi Tokyo 192-03(JP)**
Inventor: **Yamauchi, Yoshio**
**3-22-13-403, Higashitoyoda**
**Hino-shi Tokyo 191(JP)**

(74) Representative: **Rau, Manfred, Dr. Dipl.-Ing. et al**
**Rau & Schneck, Patentanwälte Königstrasse 2**
**W-8500 Nürnberg 1(DE)**

# Description

## BACKGROUND OF THE INVENTION

Field of the Invention:

This invention relates to a recycle chromatograph with supercritical fluid which separates a mixture into components by recycling a mobile phase through a separation column repeatedly until the mixture is separated sufficiently, whereby a desired component can be fractionated.

Description of the Prior Art:

Carbon dioxide is the substance most widely used as the mobile phase in supercritical fluid chromatography. Although carbon dioxide exhibits solubility when it is a liquefied gas or a supercritical fluid, i.e., its density is liquid like density 0.3 to 1.2g/mℓ, the solubility thereof with respect to the solute becomes substantially zero when the pressure is reduced to atmospheric pressure, whereupon it becomes a normal gas. Therefore, the solute of a sample can be easily separated from the fluid with high purity when carbon dioxide is used as the mobile phase in supercritical fluid chromatography.

However, many conventional supercritical fluid chromatographs are designed to be used only as an analyzing device, but not as a fractionating device, that is, a device for separating and purifying the desired component contained in a sample mixture. The major reason for this ties in that when fractionation is intended, a proper column separation efficiency needs to be realized by using a relatively long column with large diameter for high sample loading capacity, resulting in high mobile phase flowrates.

From FR-A-25 27 934 a method and an apparatus are known for the fractionation of a mixture by chromatography of a solution, the solvent being a supercritical fluid, which passes a chromatographic column with a constant flowrate. At the head of the column the mixture to be fractionated is injected in a periodic manner and the fractions of the mixture are each collected, detected at the exit of the column and directed selectively to a separator, in which by re-heating and pressure-relief the solvent is separated from the constituents of the mixture. These constituents are collected at the bottom of the separator. The solvent being collected at the top of the separator is purified, converted into supercritical state and recycled to the top of the column. Such kind of method and apparatus involve the above-described problems concerning the column separation efficiency.

In order to overcome the above-described problem, a recycle method is widely used in liquid chromatography. This recycle method is a method in which the column's effective length is increased by repeatedly-passing the mobile phase containing solute through the column via the mobile phase delivery pump, the separation or elution takes place without any solvent consumption, and a portion of column effluent containing a desired component can be drawn out for fractionation in which period the same amount of solvent can be fed. If this recycle method can be applied to a recycle chromatograph with a supercritical fluid as the mobile phase, its applicable range can be widened.

It is well known that, in SFC, a high pressure drop causes density decrease along the column toward outlet, resulting in reducing the efficiency. Therefore, the obtainable plate number is not in proportion to the column length.

In this regard, the recycle operation of SFC is very favorable, because the column efficiency is increased by a factor of the number of recycles without increasing the back-pressure, if extracolumn band broadening is negligible.

## SUMMARY OF THE INVENTION

In view of these problems, it is an object of the present invention to provide a recycle chromatograph which uses supercritical fluid as its mobile phase.

To this end, the present invention provides a recycle chromatograph with supercritical fluid as mobile phase comprising: a recycling pump for transferring a mobile phase at a predetermined flowrate; a sample injector the inlet of which is connected to the outlet of said recycling pump via a flow line; a column the inlet of which is connected to the outlet of said sample injector via a flow line, said column being filled with a stationary phase; a detector the inlet of which is connected to the outlet of said column via a flow line, while the outlet of said detector is connected to the inlet of said recycling pump, said detector detecting the components of a sample; a back-pressure regulator the inlet of which is connected to a flow line between the outlet of said detector and the inlet of said recycling pump via a flow line, while the outlet of said back-pressure regulator being connected to the atmosphere; mobile phase supplying means which is connected to the inlet flow line of said recycling pump via a flow line, said mobile phase supplying means supplying the mobile phase under a predetermined pressure to said recycling pump; a preheating coil the outlet of which is connected to the inlet of said recycling pump; and heating means to maintain the mobil phase as a supercritical fluid exceeding a critical temperature within said recycling pump, sample injector, column and preheating coil.

By this recycle chromatograph, (the column pressure drop $\Delta$p)/(column plate number) can be reduced, whereupon the effective column plate number can be increased. Thus, a sufficient resolution for fractionating a component can be obtained after appropriate recycling times. Furthermore, by combining this means for supplying a mobile phase and the back pressure regulator or a resistance pipe, the internal pressure of the column and the detector can be maintained above a critical pressure even while unnecessary components are removed or a necessary component is fractionated. As a result of this, fractionation can be performed.

The mobile phase supplying means, for example, comprises: a first pump for transferring a liquefied gas at a predetermined flowrate; a second back-pressure regulator which is connected to the outlet flow line of the first pump via a flow line, said second back-pressure regulator maintaining the back pressure at a predetermined level; and a second pump the outlet of which is connected to a flow line between an intersecting point connecting the outlet flow line of the first pump and the inlet flow line of the second back-pressure regulator and the outlet of the first pump or the inlet flow line of the first pump via a flow line, said second pump transferring modifier solvent at a predetermined flowrate.

According to the above-described structure, the supply pressure can be maintained at a predetermined level and the mixture ratio between the liquefied gas and the modifier solvent can be maintained at the predetermined ratio between the predetermined flowrate of the first pump and that of the second pump even if the supplied flow is a very small amount of several $\mu\ell$/min or less or even if this supplying flow rate is varied. As a result of this, the reproducibility of the peak retention times is improved and the base line of the output from the detector can be stabilized.

## BRIEF DESCRIPTION OF THE DRAWINGS

Fig. 1 shows the flow line of a recycle chromatograph with supercritical fluid according to a first embodiment of the present invention:
Fig. 2 shows the flow line of a mobile phase supplying device according to a second embodiment of the present invention;
Fig. 3A shows a recycle chromatogram when the wavelength is 245 nm;
Fig. 3B is a contour plot of the above chromatogram;
Fig. 4 shows the relationship between the number of recycles and the number of plates;
Fig. 5 shows a flow line for a recycle portion according to a third embodiment;

Fig. 6 shows a flow line for a recycle portion according to a fourth embodiment.

## DESCRIPTION OF THE PREFERRED EMBODIMENT

Embodiments of the present invention will be described below with reference to the accompanying drawings.

### (1) First embodiment

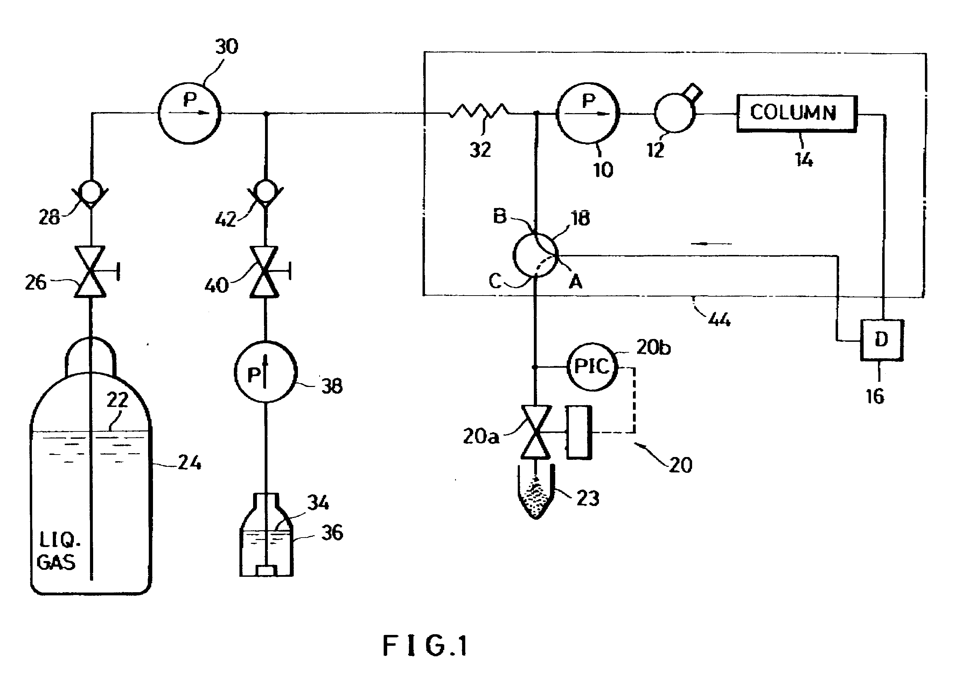

Fig. 1 shows a recycle chromatograph with supercritical fluid (Recycle SFC) according to a first embodiment. This recycle SFC comprises a recycle portion, a fractionating portion, and a mobile phase supplying portion.

The recycle portion comprises the following components connected in the sequential order as described hereinafter via piping: a recycling pump 10 for transferring a predetermined flow; a sample injector 12; a column 14 filled with a solid phase; a detector 16 such as a UV detector which can detect a sample component under a high pressure; and a three-way valve 18. As a result of this, a closed loop serving as a recycle flow line is formed. The three-way valve 18 is so arranged that a port A thereof is connected to the outlet of the detector 16, while a port B thereof is connected to the inlet of the recycling pump 10. The port A is selectively connected to either the port B or C.

The fractionating portion comprises: a back-pressure regulator 20 whose inlet is connected to the port C of the three-way valve 18 while its outlet is connected to atmosphere; and a container 23 for accumulating the fractionated component. The back pressure regulator 20 comprises: a pressure regulating valve 20a; and a pressure indicating regulator 20b which detects and indicates the pressure of the upper stream to the pressure regulating valve 20a and controls the pressure regulating valve 20a for the purpose of maintaining the detected pressure at a predetermined level which exceeds a critical pressure. This pressure regulating valve 20a is a valve having a relatively small capacity (for example 10 $\mu\ell$), and offering an excellent recovery efficiency, for example, a valve spindle vibrating solenoid valve whose valve spindle moves in the axial direction thereof for the purpose of closing the flow line when the pressure is below a predetermined pressure, while opening the same when the pressure exceeds a predetermined pressure. This valve spindle vibrating solenoid valve was disclosed by an inventor of the present invention in EP-A-0 275 933.

The mobile phase supplying portion in principle comprises the following components that are connected to each other in a series via piping in the sequential order as described hereinafter: a cylinder 24 wherein a liquefied gas 22 which serves as the mobile phase is enclosed; a shut-off valve 26; a check valve 28 for preventing reverse flow to the shut-off valve 26 which causes a pressure reduction; a pressurizing pump 30 for transferring the liquefied gas 22 for the purpose of raising the outlet pressure up to a predetermined critical pressure; and a preheating coil 32. The outlet of the preheating coil 32 is connected to the inlet of the recycling pump 10. The function performed by this check valve 28 can be as well performed by the shut-off valve 26. The shut-off valve 26 is usually provided for the cylinder 24.

In order to elute polar compounds with non-polar fluid such as carbon dioxide as the mobile phase, a polar solvent such as alcohol needs to be mixed as a modifier solvent with the mobile phase. In order to obtain reproducible peak retention times, the ratio of mixture of the above two components needs to be kept constant.

Therefore, the following components are connected to each other via piping in a series in the sequential order as described hereinafter: a reservoir 36 which contains a modifier solvent 34; a fluid delivery pump 38 for transferring the modifier solvent 34 in a quantity in proportion to the delivery of the pressurizing pump 30; a shut-off valve 40; and a check valve 42 for preventing reverse flow to the shut-off valve 40 which causes a pressure reduction. The outlet of the check valve 42 is connected to the piping between the pressurizing pump 30 and the preheating coil 32 via piping. It may be arranged in such a manner that either the shut-off valve 40 or the check valve 42 is provided.

In order to maintain the mobile phase as a supercritical fluid, the above-described recycling pump 10, the sample injector 12, the column 14, the three-way valve 18 and the preheating coil 32 are accommodated in an oven 44 which maintains its predetermined internal temperature which exceeds a critical temperature.

An operation of the thus-structured first embodiment in case where only the liquefied gas 22 is used as the mobile phase will be described.

First, the temperature of the inside of the oven 44 is raised to a predetermined temperature which exceeds the critical temperature. The pressure of the pressure regulator 20b is set to the desired predetermined level which exceeds the critical pressure. Next, the flow line in the three-way valve 18 between the ports A and C is opened, the shut-off valve 26 is opened, and the pressurizing pump 30 and the recycling pump 10 are driven for the purpose of cleaning the flow line.

Next, the flow line in the three-way valve 18 between the ports A and C is closed, and the flow line between the ports A and B is opened. The mobile phase becomes a supercritical fluid after it has passed the preheating coil 32, and is circulated in the loop. A state where the base line of the output of the detector 16 is stabilized indicates the fact that the state has become a steady state. In this state, the sample is injected into the column comprising a part of the loop by turning the internal flow line of the sample injector 12 after the sample has been loaded. As a result of this, the sample mixture is separated into each component in the column 14, and the resolution factor increases as the recycle time of the mobile phase through the loop increases. If the peak band broadening outside the column 14 is neglected, the effective length of the column 14 becomes equal to the value obtained by multiplying the length of the column 14 by the recycle time of the mobile phase.

In a case where unnecessary components are detected by the detector 16 after a proper separation has been performed, the flow line in the three-way valve 18 is turned to the back-pressure regulator 20 so as to waste the unnecessary components. During this discharge, since the mobile phase is supplied from a fluid supplying device to the inside of the loop for the purpose of maintaining the inlet pressure of the circulating pump 10 at the predetermined pressure of the pressurizing pump 30, the unnecessary components can be discharged without any reduction in the pressure of the inside of the loop below the critical pressure.

On the other hand, when the component to be separated and purified is detected by the detector 16, the flow line in the three-way valve 18 is turned to the recycling pump 10. Next, when the resolution factor of this component reaches a proper level, the three-way valve 20 is turned to the back-pressure regulator 20 for the purpose of fractionating only the desired component in the container 23.

In a case where the modifier solvent 34 is employed, the modifier solvent 34 is transferred by the pump 38 at a predetermined rate with respect to the discharge of the pressurizing pump 30.

It is well known that, in SFC, a high pressure drop causes density decrease along the column toward outlet, resulting in reducing the efficiency. Therefore, the obtainable plate number is not in proportion to the column length.

However, according to this first embodiment, an advantage can be obtained in that the pressure reduction in the column 14 can be reduced, and the effective length of the column can be lengthened, whereby a sufficient separation rate to perform fractionation can be obtained.

Furthermore, according to this first embodiment, the mobile phase is only consumed in a quantity necessary to fill the loop and a quantity discharged at the time of fractionating a necessary component or removing unnecessary components. Therefore, even if a relatively large diameter separating column is employed, the running cost can be kept low.

(2) Second embodiment

In the above-described first embodiment, since the pressurizing pump 30 is controlled so as to maintain the pressure constant, the flowrate can vary and the flowrate of the modifier supplying pump 38 is not maintained constant. Therefore, it is impossible for the mixture ratio between the liquefied gas 22 and the modifier solvent 34 to be made substantially constant, resulting into poor reproducibility of the peak retention times.

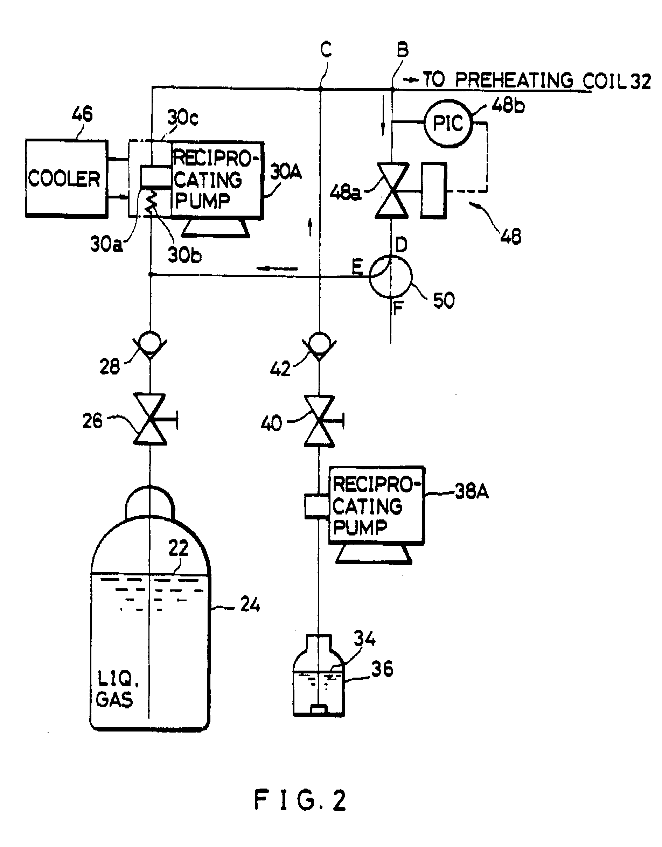

In this second embodiment, a device shown in Fig. 2 is therefore used as the fluid supplying device in order to overcome the above-described problem.

That is, a reciprocating pump 30A is used as a pump for transferring the liquefied gas 22, the reciprocating pump 30A transferring a predetermined flow. In order to maintain the mobile phase in a pump head 30a of the reciprocating pump 30A to be fluid, a cooling coil 30b is connected to the inlet of the pump head 30a, the pump head 30a and the cooling coil 30b are covered with a cooling jacket 30c, and the inside of the cooling jacket 30c is maintained below a boiling point by a cooler 46. In general, cooling means of the type described above needs to be provided for the pressurizing pump 30 shown in Fig. 1.

Furthermore, as a pump for transferring the modifier solvent 34, a reciprocating pump 38A is employed which transfers it in a predetermined quantity in proportion to the predetermined discharge of the reciprocating pump 30A. These reciprocating pumps 30A and 38A generally comprise a plunger type pump.

The inlet of a back-pressure regulator 48 is connected to the point B to the lower stream of the intersecting point C between the liquefied gas 22 and the modifier solvent 34. The outlet of the back-pressure regulator 48 is connected to a port D of a three-way valve 50. A port E of the three-way valve 50 is connected to the flow line between the check valve 28 and the cooling coil 30b. The back-pressure regulator 48 comprises, similarly to the back-pressure regulator 20 shown in Fig. 1, a pressure regulating valve 48a and a pressure regulator 48b. Either the flow line between the ports D and E in the three-way valve 50 or that between the ports D and F in the same is selectively connected to each other so that the port F in the three-way valve 50 is connected to the atmosphere.

The other structure is the same as that shown in Fig. 1. The intersecting point C between the liquefied gas 22 and the modifier solvent 34 may be located on the flow line between the check valve 28 and the pump head 30a.

Next, an operation of this mobile phase supplying device will be described.

In a case where only the liquefied gas 22 is used as the mobile phase, the cooler 46 is driven for the purpose of cooling down the inside of the cooling jacket 30c below the critical temperature. Furthermore, the discharge of the reciprocating pump 30A is arranged to be a predetermined value which exceeds the maximum supply to the recycle portion, the pressure of the pressure regulator 48b is arranged to be a predetermined level which exceeds the critical pressure, and the flow line between the ports D and E in the three-way valve 50 is connected. Next, the shut-off valve 26 is opened to drive the reciprocating pump 30A.

The mobile phase supply pressure is maintained to the predetermined pressure of the back-pressure regulator 48 even if the ratio (split ratio) between the flow supplied to the back-pressure regulator 48 and the flow supply to the preheating coil 32 is changed. Furthermore, since a part of the mobile phase is fed back to the inlet of the reciprocating pump 30A, the mobile phase consumption can be kept low.

In a case where the liquefied gas 22 and the modifier solvent 34 are used as the mobile phase, the flow line between the ports D and F in the three-way valve 50 is connected to waste the mixed fluid. The reason for this lies in that a state where the mixing ratio between the liquefied gas 22 and the modifier solvent 34 must be constant. That is, when the ports D and F in the three-way valve 50 are connected to each other, in the state where no fluid is consumed in the recycling loop, the pump 30A takes in the same amount of the fluid discharged by itself whereas, the pump 38A always discharges new solvent. Therefore the modifier solvent accumulates in the loop comprising elements 48a, 50, 30b and 30a. Therefore, the excessive amount of the mixed fluid should be wasted and should not be fed back to the delivery system.

Next, the flow arranged for the reciprocating pump 38A is made constant with respect to a predetermined flow rate (which is constant) arranged for the reciprocating pump 30A, and the shut-off valve 40 is opened together with the shut-off valve 26.

In this case, even if the split ratio is changed, the supply pressure can be maintained at the predetermined pressure arranged for the pressure regulator 48b. Furthermore, an advantage can be obtained in that since the flowrate set for the reciprocating pumps 30A and 38A is constant and each split ratio for the liquefied gas 22 and the modifier solvent 34 becomes the same value, the mixing ratio between the liquefied gas 22 and the modifier solvent 34 can be maintained at the ratio between the flows of the reciprocating pumps 30A and 38A even if slight leakage from a seal for the reciprocating pump 10 and so forth is compensated in a steady state.

(3) Experiment

Experiment results using a device according to the above-described second embodiment will now be described.

Test Conditions:

The pressure and the modifier concentration of the fluid delivered to the recycling flow line is always kept constant, even during a peak component is being collected in the following way. When the recycling mobile phase is consumed for peak collection, the mobile phase is automatically compensated by reducing the amount of fluid fed back to the pump 30A or wasted from the back-pressure regulator 48, maintaining the pressure constant in the recycling flow line. In order to reduce the fluid consumption, the flows of the pumps can be lowered during recycling is performed without collection.

SFC conditions were: column inlet pressure, 26.7 MPa; column outlet pressure, 25.0 MPa; control pressure of pumps (30A) and (38A), 25.0 MPa; recycling pump(10) flow, ca. 6 g/min; modifier solvent(34) flow, 0.15 mℓ/min.

Carbon dioxide was purchased from Tokyo Kagaku, Kawasaki, Japan, and was used as the mobile phase. Ethanol, HPLC grade was mixed with carbon dioxide as a modifier solvent.

A test mixture containing 1mg each of di-n-and di-iso-butylphthalates was used for the testing the separation by recycle SFC. As a test solute for measuring the column efficiency, di-n-octylphthalate was used. All chemicals were purchased from Wako Pure Chemicals, Osaka, Japan, except for carbon dioxide.

A JASCO SuperMegaPak SIL column, 10 mm I.D. x 250 mm length was used, the packing material was 5 μm silica gel.

Results:

Separation of isomers of dibutylphthalate by recycle SFC.

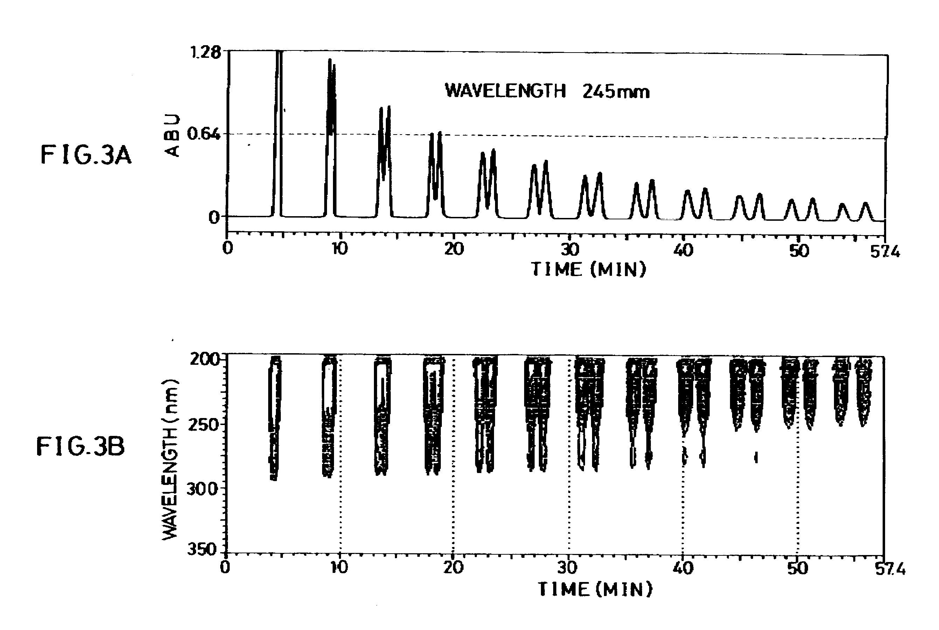

Fig. 3A shows the recycle chromatogram.

As shown, the recycle operation has been performed successfully and symmetric peaks are obtained even after twelve time recycling, and the resolution increases with the number of recycles. The contour plot shown in Fig. 3B dramatically indicates that the above two compounds are completely separated to base line after ten time recycling, while the first peak without recycling shows very poor separation and looks almost like a fused peak. Efficiency with respect to the number of recycles

Di-n-octylphthalate, which gave a capacity factor of ca. 1 under the same conditions as given above, was subjected to recycle SFC for calculating the column efficiency.

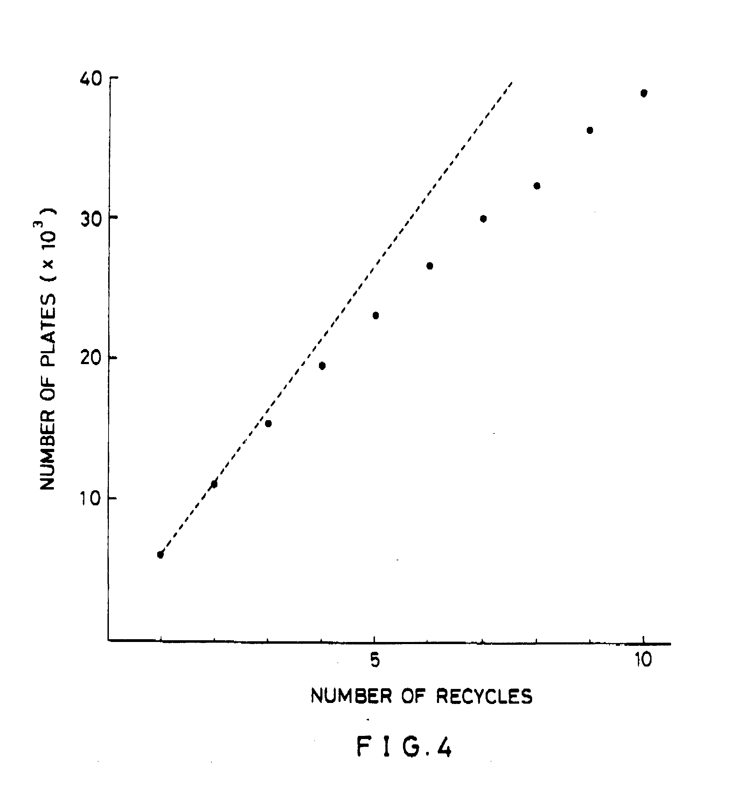

The relationship between the number of recycles and the number of plates N is shown in Fig. 4. A plate number was calculated by using the peak area and height, assuming that the concentration distribution is Gaussian.

It is remarkable that $39.2 \times 10^3$ plates have been obtained with a column pressure drop $\Delta$ P of only 1.7 MPa after ten time recycling, whereas the first cycle or elution without recycling offered only $6.1 \times 10^3$ plates with the same pressure drop.

The relationship is not linear, but was in convex shape as shown in the figure. This means, assuming the variance additivity be held, that there is some effect which makes the peak width wider as the solute resident time in the system becomes longer, besides the extracolumn band broadening caused by instrumental variance, preventing the plate number from increasing in proportion to the number of recycles. This extra broadening might be attributed to a high molecular diffusivity in supercritical carbon dioxide and too slow a linear velocity.

This new method has a potential capability that opens up a new phase in the application of supercritical fluid to preparative separation.

(4) Third embodiment

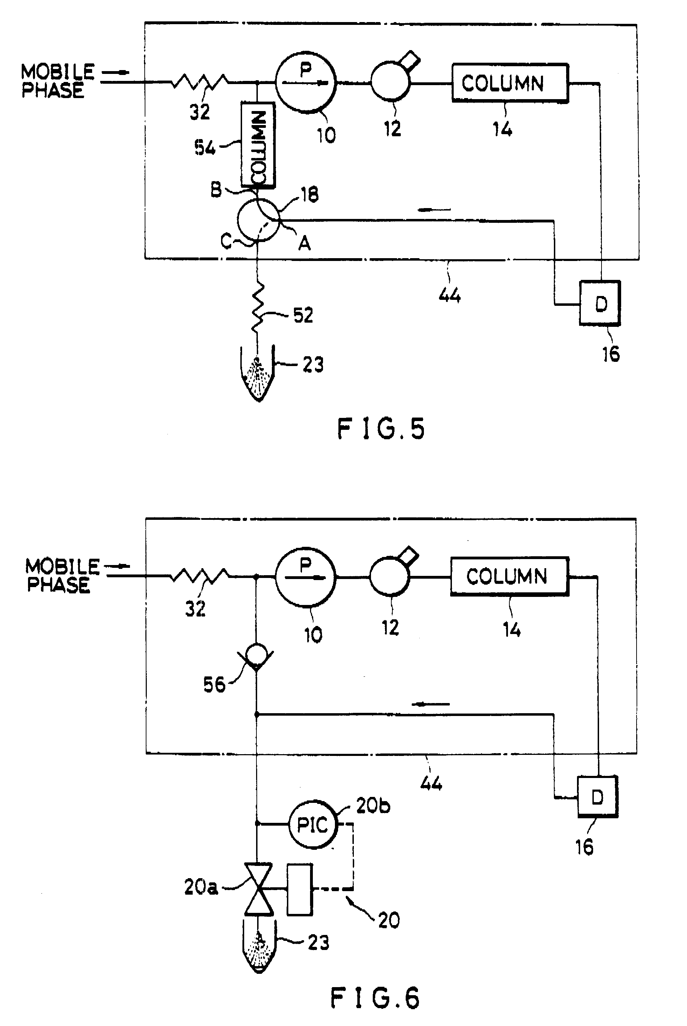

Fig. 5 shows a recycle portion of a third embodiment.

In this third embodiment, its structure can be formed simply since a resistance pipe 52 is employed as an alternative to the back-pressure regulator 20 shown in Fig. 1.

Furthermore, since a column 54 is interposed in a flow line between the port B of the three-way valve 18 and the inlet of the recycling pump 10, an advantage can be obtained in that a necessary component can be retained for a while in the column 54 without discharging it, and unnecessary components succeeding the necessary component can be discharged. That is, since the fluid does not pass through the column 54 during this discharge, a necessary component can be retained in the column 54 without discharging it.

This column 54 may, of course, be provided for the structure shown in Fig. 1.

(5) Fourth embodiment

Fig. 6 shows a recycle portion according to a fourth embodiment.

In this fourth embodiment, a check valve 56 is used as an alternative to the three-way valve 18 shown in Fig. 1 so that the mobile phase is prevented from passing from the preheating coil 32 to the back-pressure regulator 20 during removal of unnecessary components or during fractionating a necessary component. Furthermore, the back-pressure regulator 20 is connected to a flow line between the outlet of the detector 16 and the inlet of the check valve 56. This pressure regulating valve 20 is completely closed during recycle. This check valve 56 does not necessarily need to be provided.

In each of the above-described embodiments, the separation conditions may be, as need, changed by changing the pressure and the temperature of the supercritical fluid in accordance with the output of the detector 16 or the time elapse.

**Claims**

1. A recycle chromatograph with supercritical fluid as mobile phase comprising
   a recycling pump (10) for transferring a mobile phase at a predetermined flowrate;
   a sample injector (12) the inlet of which is connected to the outlet of said recycling pump via a flow line;
   a column (14) the inlet of which is connected to the outlet of said sample injector via a flow line, said column being filled with a stationary phase;
   a detector (16) the inlet of which is connected to the outlet of said column via a flow line, while the outlet of said detector is connected to the inlet of said recycling pump, said detector detecting the components of a sample;
   a back-pressure regulator (20) the inlet of which is connected to a flow line between the outlet of said detector and the inlet of said recycling pump via a flow line, while the outlet of said back-pressure regulator being connected to the atmosphere;
   mobile phase supplying means (30, 38, 30A, 38A, 48) which is connected to the inlet flow line of said recycling pump via a flow line, said mobile phase supplying means supplying the mobile phase under a predetermined pressure to said recycling pump;
   a preheating coil (32) the outlet of which is connected to the inlet of said recycling pump (10); and
   heating means (44) to maintain the mobil phase as a supercritical fluid exceeding a critical temperature within said recycling pump (10), sample injector (12), column (14) and preheating coil (32).

2. A recycle chromatograph with supercritical fluid as mobile phase according to claim 1 comprising
   flowline switching means (18) within said flow line between the outlet of said detector (16) and the inlet of said recycling pump (10), the inlet of which switching means (18) is connected to the outlet of said detector via said flow line, while either of two outlets of said flow line switching means is connected to said recycling pump via said flow line, said two outlets being selectively connected to said inlet thereof,
   wherein the inlet of said back-pressure regulator (20) is connected to another outlet of said flow line switching means via a flow line, the outlet of which being connected to the atmosphere; and
   wherein said mobile phase supplying means (30, 38, 30A, 38A, 48) is connected to a flow line between either of said two outlets of said flow line switching means and the inlet of said recycling pump via a flow line.

3. A recycle chromatograph with Supercritical fluid as mobile phase according to Claim 2, wherein said mobile phase supplying means comprising:
   a first pump (30A) for transferring a liquefied gas at a predetermined flowrate; and
   a second back-pressure regulator (48) which is connected to the outlet flow line of said first pump via a flow line, said second back-pressure regulator maintaining the back pressure at a predetermined level.

4. A recycle chromatograph with Supercritical fluid as mobile phase according to Claim 3, wherein said mobile phase supplying means further comprises:
   a second pump (38A) the outlet of which is connected to a flow line between an intersecting point of the outlet flow line of said first pump and the inlet flow line of said second back-pressure regulator and the outlet of said first pump via a flow line, said second pump transferring modifier solvent by a predetermined flowrate.

5. A recycle chromatograph with supercritical fluid as mobile phase according to Claim 3, wherein said mobile phase supplying means further comprises: a second pump (38A) the outlet of which is connected to the inlet flow line of said first pump, said second pump transferring modifier solvent by a predetermined flowrate.

6. A recycle chromatograph with supercritical fluid as mobile phase according to either Claim 4 or 5, wherein said mobile phase supplying means further comprises:

flow line switching means (50) the inlet of which is connected to the outlet of said second back-pressure regulator via a flow line, while either of the two outlets of said flow line switching means is connected to the inlet of said first pump, said two outlets being selectively connected to said inlet thereof, while another outlet being connected to the atmosphere.

7. A recycle chromatograph with supercritical fluid as mobile phase according to Claim 2, wherein said flow line switching means comprises a three-way valve (50).

8. A recycle chromatograph with supercritical fluid as mobile phase according to claim 2 comprising
a resistance pipe (52) as back-pressure regulator, the inlet of which is connected to another outlet of said flow line switching means (18) via a flow line, while the outlet of said resistance pipe being connected to the atmosphere.

9. A recycle chromatograph with supercritical fluid as mobile phase according to either Claim 2 or 8, wherein a second column (54) is interposed to a flow line between either of said outlets of said flow line switching means and the inlet of said recycling pump.

10. A recycle chromatograph with supercritical fluid as mobile phase according to Claim 1, wherein a check valve (56) is interposed in the flow line between an intersecting point of the flow lines of said mobile phase supplying means and said recycling pump and an intersecting point of the flow lines of said detector and said back-pressure regulator, said check valve (56) preventing the mobile phase from passing from said mobile phase supplying means to said back-pressure regulator.

**Patentansprüche**

1. Ein Umlaufchromatograph mit überkritischem Fluid als beweglicher Phase bestehend aus
einer Umlaufpumpe (10) mm Übertragen einer beweglichen Phase bei vorgegebener Durchflußrate;

einem Probeninjektor (12), dessen Einlaß mit dem Auslaß der benannten Umlaufpumpe durch eine Leitung verbunden ist;
einer Säule (14), deren Einlaß mit dem Auslaß des benannten Probeninjektors durch eine Leitung verbunden ist, wobei die benannte Säule mit einer stationären Phase gefüllt ist;
einem Detektor (16), dessen Einlaß mit dem Auslaß der benannten Säule durch eine Leitung verbunden ist, wobei der Auslaß des benannten Detektors mit dem Einlaß der benannten Umlaufpumpe verbunden ist und der benannte Detektor die Komponenten der Probe nachweist;
einem Gegendruckregler (20), dessen Einlaß mit einer Leitung zwischen dem Auslaß des benannten Detektors und dem Einlaß der benannten Umlaufpumpe durch eine Leitung verbunden ist, wobei der Auslaß des benannten Gegendruckreglers mit der Atmosphäre verbunden ist;
einer Versorgungsvorrichtung (30, 38, 30A, 38A, 48) für die bewegliche Phase, die mit der Einlaßleitung der benannten Umlaufpumpe durch eine Leitung verbunden ist, wobei die Versorgungsvorrichtung für die bewegliche Phase die benannte Umlaufpumpe mit der beweglichen Phase unter vorgegebenem Druck versorgt;
einer Vorwärmschlange (32), deren Auslaß mit dem Einlaß der benannten Umlaufpumpe (10) verbunden ist; und
einer Heizvorrichtung (44), um die bewegliche Phase als ein überkritisches Fluid zu erhalten, das eine kritische Temperatur innerhalb der benannten Umlaufpumpe (10), des Probeninjektors (12), der Säule (14) und der Vorwärmschlange überschreitet.

2. Ein Umlaufchromatograph mit überkritischem Fluid als beweglicher Phase gemäß Anspruch 1 bestehend aus
einer Leitungsschalteinrichtung (18) in der benannten Leitung zwischen dem Auslaß des benannten Detektors (16) und dem Einlaß der benannten Umlaufpumpe (10), wobei der Einlaß der benannten Leitungsschalteinrichtung (18) mit dem Auslaß des benannten Detektors durch eine Leitung verbunden ist, und wobei einer der beiden Auslässe der benannten Leitungsschalteinrichtung mit der benannten Umlaufpumpe durch die benannte Leitung verbunden ist, und die beiden benannten Auslässe wahlweise mit deren benannten Einlaß verbunden sind,
wobei der Einlaß des benannten Gegendruckreglers (20) mit einem anderen Auslaß der benannten Leitungsschalteinrichtung durch eine Leitung verbunden ist, deren Auslaß mit der Atmosphäre verbunden ist; und

wobei die Versorgungsvorrichtung (30, 38, 30A, 38A, 48) für die bewegliche Phase mit einer Leitung zwischen einem der zwei benannten Auslässe der Leitungsschalteinrichtung und dem Einlaß der benannten Umlaufpumpe durch eine Leitung verbunden ist.

3. Ein Umlaufchromatograph mit überkritischem Fluid als beweglicher Phase gemaß Anspruch 2, wobei die Versorgungsvorrichtung für die bewegliche Phase besteht aus:

einer ersten Pumpe (30A) zur Übertragung eines verflüssigten Gases bei vorgegebener Durchflußrate; und

einem zweiten Gegendruckregler (48), der mit der Auslaßleitung der benannten ersten Pumpe durch eine Leitung verbunden ist, wobei der benannte zweite Gegendruckregler den Gegendruck auf einem vorgegebenen Niveau hält.

4. Ein Umlaufchromatograph mit überkritischem Fluid als beweglicher Phase gemäß Anspruch 3, innerhalb dessen die Versorgungsvorrichtung für die bewegliche Phase des weiteren besteht aus:

einer zweiten Pumpe (38A), deren Auslaß mit einer Leitung zwischen einer Schnittstelle der Auslaßleitung der benannten ersten Pumpe und der Einlaßleitung des benannten zweiten Gegendruckreglers und dem Auslaß der benannten ersten Pumpe durch eine Leitung verbunden ist, wobei die benannte zweite Pumpe ein Modifizierlösungsmittel bei vorgegebener Flußrate transportiert.

5. Ein Umlaufchromatorgraph mit überkritischem Fluid als beweglicher Phase gemäß Anspruch 3, wobei die Versorgungsvorrichtung für die bewegliche Phase des weiteren besteht aus:

einer zweiten Pumpe (38A), deren Auslaß mit der Einlaßleitung der benannten ersten Pumpe verbunden ist, wobei die benannte zweite Pumpe ein Modifizierlösungsmittel bei vorgegebener Flußrate transportiert.

6. Ein Umlaufchromatograph mit überkritischem Fluid als beweglicher Phase gemäß Anspruch 4 oder 5, innerhalb dessen die Versorgungsvorrichtung für die bewegliche Phase des weiteren besteht aus:

einer Leitungsschalteinrichtung (50), deren Einlaß mit dem Auslaß des benannten zweiten Gegendruckreglers durch eine Leitung verbunden ist, wobei einer der zwei Auslässe der benannten Leitungsschalteinrichtung mit dem Einlaß der benannten ersten Pumpe verbunden ist, und wobei die zwei benannten Auslässe wahlweise mit deren Einlaß verbunden sind, und ein anderer Auslaß mit der Atmosphäre verbunden ist.

7. Ein Umlaufchromatograph mit überkritischem Fluid als beweglicher Phase gemäß Anspruch 2, wobei die benannte Leitungsschalteinrichtung aus einem Dreiwegeventil (50) besteht.

8. Ein Umlaufchromatorgraph mit überkritischem Fluid als beweglicher Phase gemäß Anspruch 2 bestehend aus einem Rohrleitungswiderstand (52) als Gegendruckregler, dessen Einlaß mit einem anderen Auslaß der benannten Leitungsschalteinrichtung (18) durch eine Leitung verbunden ist, wobei der Auslaß des benannten Rohrleitungswiderstandes mit der Atmosphäre verbunden ist.

9. Ein Umlaufchromatograph mit überkritischem Fluid als beweglicher Phase gemäß Anspruch 2 oder 8, wobei eine zweite Säule (54) in die Leitung zwischen einem der Auslässe der benannten Leitungsschalteinrichtung und dem Einlaß der benannten Umlaufpumpe zwischengeschaltet ist.

10. Ein Umlaufchromatograph mit überkritischem Fluid als beweglicher Phase gemäß Anspruch 1, wobei ein Rückschlagventil (56) in die Leitung zwischen einer Schnittstelle der Leitungen der benannten Versorgungsvorrichtung für die bewegliche Phase und der benannten Umlaufpumpe und einer Schnittstelle der Leitungen des benannten Detektors und benannten Gegendruckreglers zwischengeschaltet ist, wobei benanntes Rückschlagventil (56) die bewegliche Phase davon abhält, von der benannten Versorgungsvorrichtung für die bewegliche Phase zum benannten Gegendruckregler zu gelangen.

**Revendications**

1. Chromatographe à recyclage à fluide supercritique en tant que phase mobile comprenant :

- une pompe de recyclage (10) pour le transfert d'une phase mobile avec un débit prédéterminé;
- un injecteur d'échantillon (12) dont l'entrée est raccordée à lu sortie de ladite pompe de recyclage via une ligne d'écoulement;
- une colonne (14) dont l'entrée est raccordée à la sortie dudit injecteur d'échantillon via une ligne d'écoulement, ladite colonne étant remplie d'une phase stationnaire;

- un détecteur (16) dont l'entrée est raccordée à la sortie de ladite colonne via une ligne d'écoulement tandis que lu sortie dudit détecteur est raccordée à l'entrée de ladite pompe de recyclage, ledit détecteur détectant les composants d'un échantillon;

- un régulateur de pression de refoulement (20) dont l'entrée est raccordée à une ligne d'écoulement entre la sortie dudit détecteur et l'entrée de ladite pompe de recyclage vie une ligne d'écoulement tandis que la sortie dudit régulateur de pression de refoulement est raccordée à l'atmosphère;

- un moyen d'alimentation de la phase mobile (30, 38, 30A, 38A, 40) qui est raccordé à la ligne d'écoulement d'entrée de ladite pompe de recyclage via une ligne d'écoulement, ledit moyen d'alimentation de la phase mobile alimentant la phase mobile sous une pression prédéterminée vers ladite pompe de recyclage;

- un bobinage de préchauffage (32) dont la sortie est raccordée à l'entrée de ladite pompe de recyclage (10) et

- un moyen do chauffage (44) maintenant la phase mobile a l'état de fluide supercritique dépassant une température critique à l'intérieur de ladite pompe de recyclage (10), de l'injecteur d'échantillon (12), de la colonne (14) et du bobinage de préchauffage (32).

2. Chromatographe à recyclage à fluide supercritique en tant que phase mobile selon la revendication 1, comprenant un moyen de commutation de ligne d'écoulement (18) dans ladite ligne d'écoulement entre la sortie dudit détecteur (16) et l'entrée de ladite pompe de recyclage (10), l'entrée de ce moyen de commutation (18) étant raccordée à la sortie dudit détecteur vis ladite ligne d'écoulement tandis que l'une des deux sorties dudit moyen de commutation de ligne d'écoulement est raccordée à ladite pompe de recyclage via ladite ligne d'écoulement, lesdites deux sorties étant sélectivement raccordées à ladite entrée, chromatographe dans lequel l'entrée dudit régulateur de pression de refoulement (20) est raccordée à une autre sortie dudit moyen de commutation de ligne d'écoulement via une ligne d'écoulement dont la sortie est raccordée à l'atmosphère et dans lequel ledit moyen d'alimentation de la phase mobile (30, 38, 30A, 38A, 48) est raccordé à une ligne d'écoulement entre n'importe laquelle desdites deux sorties dudit moyen de commutation de ligne d'écoulement et l'entrée de ladite pompe de recyclage via une ligne d'écoulement.

3. Chromatographe à recyclage à fluide supercritique en tant que phase mobile selon la revendication 2, dans lequel ledit moyen d'alimentation de la phase mobile comprend :

- une première pompe (30A) pour le transfert d'un gaz liquéfié à un débit prédéterminé et

- un second régulateur de pression de refoulement (48) qui est raccordé à la ligne d'écoulement de sortie de ladite première pompe via une ligne d'écoulement, ledit second régulateur de pression de refoulement maintenant le retour de pression à un niveau prédéterminé.

4. Chromatographe à recyclage à fluide supercritique en tant que phase mobile selon la revendication 3, dans lequel ledit moyen d'alimentation de la phase mobile comprend, de plus, une seconde pompe (38A) dont le sortie est raccordée à uns ligne d'écoulement entre un point d'intersection de la ligne d'écoulement de sortie de ladite première pompe et le ligne d'écoulement d'entrée dudit second régulateur de pression de refoulement et la sortie de ladite première pompe via une ligne d'écoulement, ladite seconde pompe transférant le solvant de modification à un débit prédéterminé.

5. Chromatographe à recyclage à fluide supercritique en tant que phase mobile selon la revendication 3, dans lequel ledit moyen d'alimentation de la phase mobile comprend, de plus, une seconde pompe (38A) dont la sortie est raccordée à la ligne d'écoulement d'entrée de ladite première pompe, ladite seconde pompe transférant le solvant de modification avec un débit prédéterminé.

6. Chromatographe à recyclage à fluide supercritique en tant que phase mobile selon la revendication 4 ou 5, dans lequel ledit moyen d'alimentation de la phase mobile comprend, de plus, un moyen de commutation de ligne d'écoulement (50) dont l'entrée est raccordés à la sortie dudit second régulateur de pression de refoulement via une ligne d'écoulement tandis que l'une quelconque des deux sorties dudit moyen de commutation de ligne d'écoulement est raccordée à l'entrée de ladite première pompe, lesdites deux sorties étant sélectivement raccordées à ladite entrée tandis qu'une autre sortie est raccordée à l'atmosphère.

7. Chromatographe à recyclage à fluide supercritique en tant que phase mobile selon la revendication 2, dans lequel ledit moyen de commutation de ligne d'écoulement comprend une soupape à trois voies (50).

8. Chromatographe à recyclage à fluide supercritique en tant que phase mobile selon la revendication 2, comprenant une conduite de charge (52) en tant que régulateur de pression de refoulement dont l'entrée est raccordée à une autre sortie dudit moyen de commutation de ligne d'écoulement (18) via une ligne d'écoulement tandis que la sortie de ladite conduite de charge est raccordée à l'atmosphère.

9. Chromatographe à recyclage à fluide supercritique en tant que phase mobile selon la revendication 2 ou 8, dans lequel une seconde colonne (54) est interposée dans une ligne d'écoulement entre une quelconque desdites sorties dudit moyen de commutation de ligne d'écoulement et l'entrée de ladite pompe de recyclage.

10. Chromatographe à recyclage à fluide supercritique on tant que phase mobile selon la revendication 1, dans lequel un clapet anti-retour (56) est interposé dans la ligne d'écoulement entre un point d'intersection des lignes d'écoulement dudit moyen d'alimentation de la phase mobile et de ladite pompe de recyclage et un point d'intersection des lignes d'écoulement dudit détecteur et dudit régulateur de pression de refoulement, ledit clapet anti-retour (56) empêchant la phase mobile de passer dudit moyen d'alimentation de la phase mobile audit régulateur de pression de refoulement.

F I G.1

EP 0 309 380 B1

F I G. 2

FIG.3A

FIG.3B

F I G. 4

FIG.5

FIG.6